# EUROPEAN PATENT SPECIFICATION

(11) **EP 0 967 175 B1**
(45) Date of publication and mention of the grant of the patent: **02.06.2004**
(21) Application number: 98660064.1
(22) Date of filing: 26.06.1998
(51) Int. Cl.: C01B 15/10

(54) **Stabilized sodium carbonate peroxyhydrate**
Stabilisiertes Natriumcarbonat-Peroxyhydrat
Carbonate de sodium peroxyhydraté stabilisé

(43) Date of publication of application: 29.12.1999
(73) Proprietor: Kemira Oyj, 00180 Helsinki (FI)
(72) Inventor: Korvela, Timo, 90650 Oulu (FI); Renvall, Ikka, 02320 Espoo (FI)
(74) Representative: Svensson, Johan Henrik

(56) References cited:
- EP-A- 0 623 553
- EP-A- 0 634 482
- WO-A-97/35951
- DE-A- 19 506 004
- US-A- 4 075 116

## Description

The present invention relates to sodium carbonate peroxyhydrate (SCPH) stabilized by coating and to a process for the preparation of such coated SCPH. The product of the invention is particularly suitable to be used in detergents based on silicate based builders, such as zeolites.

Sodium perborate has for a long time been used as bleaching agent in detergents. The main commercial product has been sodium perborate tetrahydrate (PB 4). The main drawback of PB 4 is that it is sparingly soluble in water. When it has become more and more common to use lower temperatures and a bleaching activator e.g. TAED, there has been a change over to the more soluble sodium perborate monohydrate (PB 1). Later sodium perborate has been launched also in automatic dishwashing detergents in place of chlorinated compounds as well as in stain salts.

Sodium perborate is a rather feasible product and it is rather stable in phosphate-free products, which have become more common especially in countries, where there is not an extended and effective sewage water treatment. The main drawback of sodium perborate may be that it contains boron. It has been claimed that boron would cause health risks. Therefore the maximum concentration of boron allowed in potable water has been restricted. There have also been claims that the limits should further be decreased. Therefore there is a need to have a boron-free bleaching agent.

Sodium carbonate peroxyhydrate (2 Na₂CO₃ * 3 H₂O₂) would be a product of choice, since it does not leave any degradation products harmful for the environment. In addition it is a very water soluble compound.

Sodium carbonate peroxyhydrate (SCPH) is commonly but misleadingly called "sodium percarbonate", which gives the impression that the product would be a so-called percompound or persalt. As the formula above shows, SCPH is only a so-called addition product, in which hydrogen peroxide is only loosely bound. It does not contain any group, which would correspond to the structure of the true percompounds, such as sodium perborate, monosodium persulphate, alkali persulphates etc. There exists a true sodium percarbonate, but it is a dangerous compound and cannot be used e.g. in household products. SCPH is not very stable probably partly due to that it is an addition compound. Due to this feature, the technological criteria for the manufacturing process are very high. Rather stable sodium carbonate peroxyhy-drates can be produced by modem techniques, but still they are not stable without a coating if mixed with other ingredients in detergent mixtures. See e.g. the applicant's application PCT /FI93/00356.

Also in household products such as e.g. automatic dishwashing detergents and stain salts, in which the properties will approach those of laundry detergents and which will contain surface active agents, enzymes, activators for hydrogen peroxide etc., it is desirable to protect SCPH for decomposition.

In household technochemical products bleaching agents are mostly used in laundry (heavy duty) detergents. It has become more and more common to use as builders different kinds of zeolites, especially zeolite 4A instead of sodium tripolyphosphate (STPP). It has not been possible to use SCPH as such in zeolite containing detergents, since the product will decompose very rapidly in contact with zeolites.

The reason for this effect is not accurately known. It has to be noticed that zeolites contain in general a considerable amount of water, e.g. zeolite 4 A contains normally about 20% water. In order to obtain an impression of environmental friendliness, there has been an increased use of zeolites and also other silicates instead of phosphates. At the same time there has been a trend for replacing sodium perborate with sodium carbonate peroxyhydrate. Due to the instability of SCPH problems have emerged. To solve the problems a lot of different stabilization methods have been developed.

One group of stabilization methods comprises the use of organic compounds either of monomeric or polymeric compounds. They may stabilize SCPH a little, but the organic compounds can quite easily react with SCPH or hydrogen peroxide formed when the peroxyhydrate adsorbs moisture or dissolves in water. The salts of simple polycarboxylic acids such as e.g. sodium citrate are not very effective chelators for transition metal ions and the transition metal chelates can also act as a decomposition catalyst both for sodium carbonate peroxyhydrate and hydrogen peroxide. The polymers of smaller molecular weight suffer from the reactivity with the bleaching agent or hydrogen peroxide, while the higher molecular weight compounds can additionally increase the dissolution time of the final coated product.

A considerable number of inventions deals with coatings containing boric acids or boron containing compounds, such as alkali orto- and metaborates with or without additives such as e.g. alkali silicates. All these methods suffer from the drawback that though the stability can be quite good, they still contain boron. In many cases also the solubility of the final product can be reduced when using boron containing materials, which is not necessarily a desirable property for the final product.

In order to avoid the aforesaid drawbacks the goal has been to develop coatings, which firstly, do not contain organic compounds, not at least such that can react with SCPH or alkaline hydrogen peroxide in the presence or absence of transition metal ions and secondly, coatings that do not contain boron compounds.

According to US-patent 4 325 933 (Kao Soap Co., Ltd.) magnesium sulphate can be used for coating, but magnesium sulphate alone does not give enough stability. EP 623 553 (Mitsubishi Gas Chemical) discloses a product, in which the coating has been obtained by a layer containing magnesium sulphate, sodium silicate and additionally an alkali metal salt selected from the group consisting of alkali metal carbonates, alkali metal bicarbonates and alkali metal sulphates. The production of such a coating suffers from the drawback that three different coating chemicals have to be used. Additionally sodium silicate, at least when it is used in bigger amounts can increase caking tendency, which in turn will decrease the productivity of the coating process when a fluidized bed dryer is used as the coating equipment.

A coating according to GB 1 466 799 (Interox) using only soda ash or sodium sulphate alone has already been known for long time. But according to the document each of these compounds will give lower stability than a mixture of them.

Since it is known that sodium sulphate, sodium carbonate and sodium chloride can form together an addition product with hydrogen peroxide, there are inventions, EP 592 969 and EP 624 549 (Solvay Interox GmbH) based on the use of sodium sulphate and sodium chloride as the coating material. Chloride ions are disadvantageous in a washing process, since the chloride ions can cause corrosion in stainless steel used as construction material for washing machines. In addition chlorinated compounds may be generated when a bleaching agent based on hydrogen peroxide and a bleaching activator is used in order to generate a bleaching agent with higher oxidation potential than hydrogen peroxide. An example of this kind of a bleaching agent is peroxyacetic acid, which is generated from hydrogen peroxide based bleaching agents and from tetraacetylethylenediamine (TAED).

The applicant has developed a method according to WO 95/15291, which uses sodium sulphate and where the granules formed in a fluidized bed equipment are coated in a fluidized bed using a carbon dioxide containing atmosphere, when feeding the sodium sulphate solution into the fluidized bed dryer.

Later it has been claimed that sodium sulphate alone would be advantageous according to WO 97/19890 (Degussa A.G.) when the sodium carbonate peroxyhydrate is produced by fluidized bed granulation and when the coating with sodium sulphate is carried out in a fluidized bed dryer.

Chelating agents have been used when synthesizing crystalline sodium carbonate peroxyhydrate. In some patents or patent applications there has also been mentioned that chelating agents can be used as additional ingredients.

EP 623 553, mentioned earlier, suggests that additionally a chelating agent or stabilizer, such as EDTA or salts thereof, NTA, etc may be used in combination with a boron-free coating agent, which comprises already several inorganic ingredients.

EP 624 549, mentioned earlier, suggests that when coating with a mixture of sodium sulphate and sodium chloride a lot of different chelating agents such as EDTA and phosphonic acid can be used. The beneficial effect of these chelating agents has, however, not been shown. The same is valid for the application DE 4 324 104 (Degussa).

WO 95/23208 ( EKA Chemicals AB) suggests that a coating which contains silicate and a magnesium salt should not contain EDTA, DTPA or NTA but a non-nitrogen containing chelating agent belonging to groups of aliphatic carboxylic acids or hydroxycarboxylic acids.

WO 97/35951 (Solvay Interox) suggests that when SCPH is made by crystallization, the coating materials often advantageously comprise one or more materials selected from the following: Alkali metal and/or alkaline earth metal, particularly sodium or soluble magnesium, salts of mineral or other inorganic acids and especially sulphate, carbonate, bicarbonate, phosphate and/or polymeric phosphates, silicates, borates and the corresponding boric acids. The coating can additionally or alternatively include water soluble acids and salts of metal chelating agents, such as in the classes of aminoethylenepolycarboxylates and aminoethylenepolymethylene-phosphonates, including the well known EDTA, DTPA, EDTMPA and DTPMPA, and/or cheating carboxylic or hydroxycarboxylic acids, such as citrate, tartrate or gluconate. Other constituents can include fatty acids (eg up to C20) and/or the corresponding amide. Thus all possible combinations have been mentioned, of which many have been known to produce inadequate protection for SPCH. No proof has been shown that a combination of a chelating agent and sodium sulphate would improve the performance of the coating when sodium sulphate is used.

The products produced by the two methods mentioned above (WO 95/15291 and WO 97/19890) using sodium sulphate alone or with an intermediate layer of sodium bicarbonate can reach an acceptable stability for most of the present common laundry detergents. In addition they are very easy to prepare using only the solution of sodium sulphate. Since the raw materials and processes for making different kinds of detergents are changing at a fast rate, there are needs for good coatings which could be used in a changing environment and which would perform also equally well in the present systems.

Now it has been found that, when certain chelating agents are added to the sodium sulphate solution and sodium carbonate peroxyhydrate granules are coated in a fluidized bed using this sodium sulphate solution, coatings can be obtained, which render the product very stable in contact with zeolite 4 A. Of course this product can also be used in products containing such kinds of zeolites and silicates, which do not decompose sodium carbonate peroxyhydrate as fast as zeolite 4 A, e.g. such as zeolite 24 A (Crosfield group), zeolite P (Degussa A.G.), layered silicates (Hoechst A.G.) etc. and other builders, such as phosphates.

Its has also been found that certain kinds of chelating agents give an additional stability for the coated SCPH, when the chelating agent is mixed in small amounts to the sodium sulphate solution, which will be used as the coating agent.

The chelating agents, which enhance the stabilization activity of sodium sulphate coating belong e.g to aminophosphonates, such as (poly)aminopolymethylene phosphonic acids, e.g. EDTMPA and DTPMPA. However, phosphonates without an aminogroup e.g. 1-hydroxyethylene-1,1-diphosphonic acid (HEDP) will not work. Another group of compounds consists of the conventional (poly)aminopolycarboxylic acids, such as EDTA and DTPA. These chelating agents have been used in many different applications to stabilize peroxycompounds, such as hydrogen peroxide and peracetic acid in different combinations and in varying amounts especially in the presence of transition metals, which can catalyze the decomposition of peroxycompounds. It is, however, known that the iron-EDTA complex will decompose sodium perborate, while Mn-DTPA complex and also Mn-DTPMA complex will catalyze the decomposition of peracetic acid. Therefore the stabilization of a peroxycompound depends on the peroxycompound in question and on the surrounding environment.

Surprisingly it has also been found that chelating agents, which will not stabilize alkaline hydrogen peroxide solutions as well as e.g. EDTA and DTPA in the presence of transition metals (WO 97/30209, table 6), such as ethylenediamine-N,N'-disuccinic acid (EDDS) and 2,2'-iminodisuccinic acid (ISA), will enhance the stability of SCPH when applied to the sodium sulphate coating. Since the S,S-EDDS is readily biodegradable, while the mixture of the different isomers is not, it is of course for environmental reasons better to use the biodegradable isomer as the additive. ISA can be made from ammonia and maleic anhydride or maleic acid. Then D,D-, L,L- and D,L -isomers of ISA are formed. ISA can also be made from L-aspartic acid, and then mainly the L,L- and D-L-isomers are formed. If D,L-aspartic acid is used as the raw material, the isomers are D,L-, L,L- and D-D-ISA. Since all the mixtures show good biodegradation properties, the choice between the products is here not very important. In the following ISA made from D,L-aspartic acid is called "D,L-ISA". A characteristic for these chelating agents is that they contain an aspartic acid or a succinic acid unit as is the case with the EDDS and ISA. The other examples are aspartic acid N,N-diacetic acid and aspartic acid N-monoacetic acid. The succinic acid group can be extended by few CH₂-units. Also compounds that contain an aspartic acid unit and/or a succinic acid group can advantageously be used (PCT/FI97/00332 and FI 980530). Examples are e.g. N-bis[(1,2-dicarboxyethoxy)ethyl]aspartic acid (BCA 6) and N-bis[(1,2-dicarboxyethoxy)ethyl]amine (BCA 4). The last one will not stabilize an alkaline hydrogen peroxide solution containing transition metal ions, while the first one does, but they will enhance the stability of coated SCPH almost equally well.

Since those chelating agents, which are not very good stabilizers for the alkaline hydrogen peroxide will work well with the sodium sulphate, the mechanism cannot depend on the fact that the chelating agent would bind the possible transition metals and protect the released hydrogen peroxide from decomposition, when the coated SCPH is put under humid and warmed up conditions and when hydrogen peroxide could be released both from the internal of SCPH and from the surrounding atmosphere, if it could diffuse through the protective layer of sodium sulphate or through the minute pores, cracks etc in the protective coating.

Thus the protecting mechanism is unknown, but cannot, at least not solely, depend on inactivation of the detrimental metal ions, which thus could inhibit the decomposition of SCPH.

It is also been found that if crystalline SCPH is granulated and then coated by fluidized bed technique, the stability is much inferior and the chelating agents mentioned above will not enhance the stability of coated SCPH, not at least when the added amounts are small.

Therefore it is very crucial to make the SCPH granules by the fluidization method and not use crystalline SCPH as the starting material.

Thus, in one aspect of the invention there is provided a stabilized sodium carbonate peroxyhydrate comprising granules of sodium carbonate peroxyhydrate made of non-crystalline sodium carbonate peroxyhydrate and having a coating layer thereon, wherein said coating layer comprises sodium sulphate and a chelating agent selected from the group consisting of:
(a) (poly)aminophosphonic acids or alkali metal salts thereof,
(b) (poly)aminopolycarboxylic acids or alkali metal salts thereof, and
(c) N-bis- or tris-[(1,2-dicarboxy-ethoxy)ethyl]amines or alkali metal salts thereof,
and wherein the amount of the chelating agent is from 100 to 3000 ppm based on the weight of the coating layer.

Said group (a) derivatives include for example (poly)aminophosphonic acid derivatives having the general formula (I) 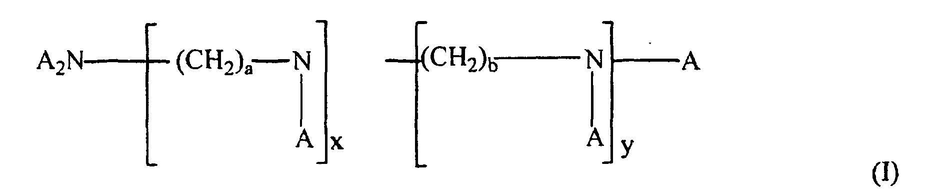 wherein
A is -CH₂PO₃R₂ , wherein R is hydrogen or M, wherein M is an alkali metal ion,
x is 0-6, preferably 0-3,
y is 0-6, preferably 0-2,
a is 2-10, preferably 2-4, and
b is 2-10, preferably 2-6.

Preferred derivatives of formula (I) are: aminotri(methylenephosphonic acid) i.e. Dequest 2000 (x=0 and y=0, acid), pentasodium salt of ethylenediaminetetra-(methylenephosphonic acid) i.e. EDTMPA or Dequest 2046 (x=0, b=2 and y=1), heptasodium salt of diethylenetriaminepenta(methylenephosphonic acid) i.e. DTPMPA or Dequest 2066 (x=1, a=2, y=1 and b=2), and Dequest 2050 (x=0, b=6 and y=1).

Said group (b) derivatives include for example (poly)aminopolycarboxylic acid derivatives having following general formula (II) or (III) or (IV): 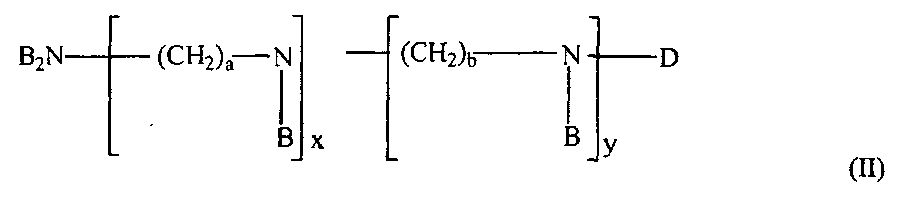 wherein
B is -CH₂COOR,
D is -CH₂COOR or -CH₂CH₂OH,
R is hydrogen or M, wherein M is an alkali metal ion,
x is 0-6, preferably 0-3,
y is 0-6, preferably 0-2,
a is 2-10, preferably 2-4, and
b is 2-10, preferably 2-6; 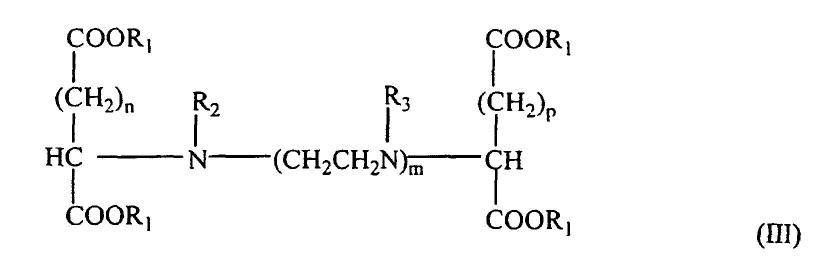
wherein
n is 1-3,
m is 0-3,
p is 1-3,
R₁'s are independently hydrogen or an alkali metal ion and
R₂ and R₃ are independently hydrogen, CH₂OH, CH₂CH₂OH or CH₂O(CH₂CH₂O)₁₋₁₀CH₂CH₂OH; 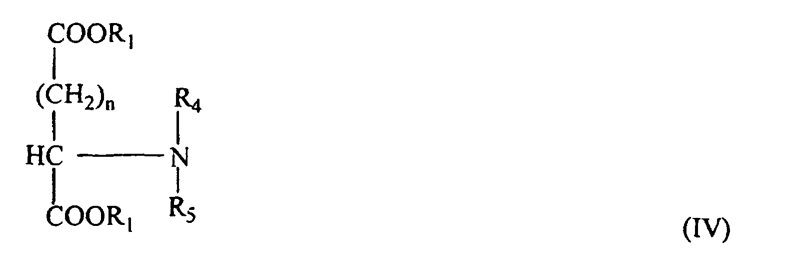 wherein
n is 1-3, preferably 1 or 2,
R₄ is -CH₂COOR₁,
R₅ is -CH₂COOR₁ or hydrogen, and
R₁ is hydrogen, or an alkali metal ion.

Preferred derivatives of formula (II) are:
ethylenediamine tetra-acetic acid i.e. EDTA (D=B, x=0, b=2 and y=1)
diethylenetriamine penta-acetic acid i.e. DTPA (D=B, x=1, a=2, b=2 and y=1)
PDTA (D=B, x=0, b=3 and y=t)
HEDTA (D=-CH₂CH₂OH, x=0, b=2 and y=1) and
NTA (D=B, x=0 and y=0).

Preferred derivatives of formula (III) are:
2,2'-iminodisuccinic acid i.e. ISA (m=0, R₂=H, n= 1 and p=1)
etylenediamine-N,N'-disuccinic acid i.e. EDDS (m=1, R₂=H, R₃=H, n=1 and p=1).

Preferred derivatives of formula (IV) are:
aspartic acid N,N-diacetic acid (R₅=R₄ and n=1) and
aspartic acid N-monoacetic acid (R₅=H and n=1).

Said group (c) derivatives include for example N-bis- or tris-[(1,2-dicarboxyethoxy)ethyl]amine derivatives having the general formula (V) 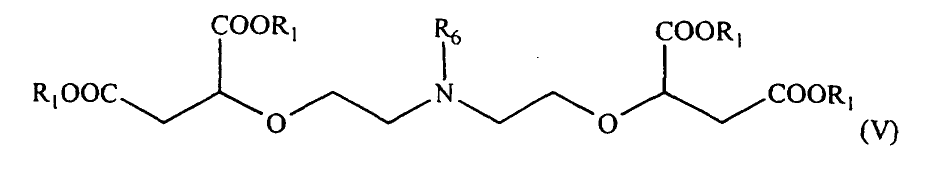 wherein 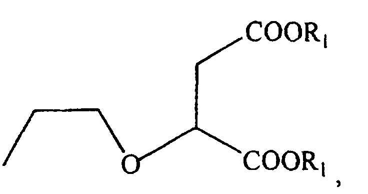
R₆ is hydrogen,
an alkyl group having 1-30 carbon atoms,
an alkyl group having 1-30 carbon atoms and additionally 1-10 carboxylic groups,
an alkyl group having 1-30 carbon atoms and additionally 1-10 carboxylic ester groups,
a (poly)ethoxylated hydrocarbon group having 1-20 ethoxyl groups, or
a carboxylic amide group having 1-30 carbon atoms, where the N-R₆ bond is an amide bond, and
R₁'s are independently hydrogen or an alkali metal ion.

Preferred derivatives of formula (V) are:
N-bis[(1,2-dicarboxy-ethoxy)ethyl]amine i.e. BCA4,
N-bis[(1,2-dicarboxy-ethoxy)ethyl]aspartic acid i.e. BCA6 and
N-carboxymethyl-N-bis[(1,2-dicarboxy-ethoxy)ethyl]amine.

In the above definitions of M and R₁ "alkali metal ion" is preferably a sodium or potassium ion, and "alkaline earth metal ion" is preferably a kalcium or magnesium ion.

Suitably the amount of the coating layer is from 5 to 20% by weight, preferably from 7 to 15% by weight based on the weight of uncoated sodium carbonate peroxyhydrate. An especially preferred amount of the coating layer is about 10% by weight.

Suitably the amount of the chelating agent is preferably from 200 to 2000 ppm, based on the weight of the coating layer.

Suitably the moisture content of the coated SCPH is below 0.5% by weight, preferably below 0.3% by weight.

In an other aspect of the invention there is provided a process for the preparation of a stabilized sodium carbonate peroxyhydrate as defined above comprising applying an aqueous solution of sodium sulphate and said chelating agent to granules of sodium carbonate peroxyhydrate followed by drying to obtain a coating layer comprising sodium sulphate and said chelating agent on said granules.

The coating operation can be made by any known coating method, e.g. by highefficiency mixing. The preferable method, however, is fluidized bed coating, since the drying can be made in the same equipment. These kinds of coating processes are well suited, especially when the granulation of SCPH has been carried out by a fluidized bed granulation process.

Thus, the coating can be applied in a fluidized bed dryer on granules made by fluidized bed granulation. The coating can equally well be applied on other kinds of granules made by e.g. matrix extrusion, roller compaction and mixer, tumbler or drum granulation.

It is very important to keep the moisture content at least below 0.5% of the coated SCPH product (expressed as loosely bound water), preferably below 0.3% water in order to guarantee a good stability against silicon containing detergent builders. The time required to obtain this moisture content depends on the size of granules to be coated. The extra drying time after the coating at 50-60 °C will be 4-30 minutes, preferably 5-10 minutes, when the target end product has the average granule size of 0.7-0.8 mm. For bigger particle sizes a longer time up to 60 minutes, preferably between 5 and 30 minutes is required.

The stabilized sodium carbonate peroxyhydrate of the invention can be used in detergents, cleaning agents or other bleaching or disinfecting products, in particular in detergents containing silicate builders, such as zeolites.

The use of the new coated product of the invention is not restricted only to laundry detergents, but it can be used e.g. in automatic dishwashing detergents, stain salts and products where sodium carbonate peroxyhydrate is used alone or together with a bleaching activator to give the product a bleaching or disinfecting property.

The present invention will now be described in detail by reference to the following coating experiments.

### Coating experiments

The coating experiments were carried out in an Aeromatic Strea 1 equipment. About 400 g unsieved SCPH granules made by fluid bed granulation were used as the material to be coated. The original active oxygen content of the granules was between 13.2 and 14.3%. The granular SCPH had an apparent density of about 1.1 kg/l. The SCPH granules used for coating trials were mostly from the same production lot in order to avoid the ambiguity due to the different SCPH qualities unless there was a wish to test other grades of granules. Sodium sulphate was dissolved at 40 °C so that the solution was almost saturated. When all sodium sulphate had dissolved, the chelating agent was added and the temperature was increased to 60 °C and the solution was pumped at this temperature to the coating equipment. The conditions in the fluidized bed were such that the bed temperature was 50-55 °C during the coating, which was continued to reach an amount of 10 wt.% of the coating. The conditions guaranteed a smooth operation and a good quality of the products. The fluidization was continued after coating for from 0 minutes up to 30 minutes in order to keep the moisture content below 0.5%.

In detergent industry it is very common to close the products in sealed cardboard boxes for testing the stability of the products containing bleaching agents. Then the packages are put in a climate chamber at temperature and relative humidity of 30-40 °C resp. 70-80%. This system is very time consuming, since water vapour will not very easily penetrate the walls of packages and since the water vapour inside the packages will mainly depend on the water content of the enclosed product. The method will not give any information on what is happening when the package has been opened and left in the warm and humid conditions. Another method is to put the sample in a device (vessel, tub), which is covered with a semipermeable membrane or with plastic foil which contains minute pinholes. This method will not always give reliable results, since the oxygen generated by the decomposition of sodium carbonate peroxyhydrate will inhibit or slow down the diffusion of water vapour from the surrounding atmosphere.

The applicant has used a method which has worked well in the applicant's tests and by which quite reliable results can be obtained after 1-2 weeks. In order to get even more reliable results, a testing time of 4 weeks is enough. Since the common household detergents contain 20-30% zeolite or sometimes a little more, the applicant has used in the tests a method, in which the SCPH sample and zeolite 4 A are mixed in a weight ratio of 50:50. The total sample weight is about 5 grams. The samples are tested under temperature of 30 °C and 70% relative humidity in open flat bottomed glass vessels. It is obvious that this kind of testing method is very rigorous. This method gives more realistic values seen from the point of the end user of the SCPH containing products.

The content of active oxygen was determined by titration with a potassium permanganate solution. The decomposition was calculated from the decrease of the amount of active oxygen and the changes in weights of the samples.

The test results after 4 weeks are shown in Table 1.

**Table 1**

| Samples and testing results Uncoated SCPH, act.oxygen content 13.7 % | | | | |
|---|---|---|---|---|
| **SCPH/coating wt.%** | **Chel.agent/weight in coating ppm** | **Decomposition % after 4 weeks** | **Remarks** | **Moisture content %** |
| 90:10 | none | 28.1 | | 0.3 |
| 90:10 | Dequest 2046/100 | 27.7 | | <0.5 |
| 90:10 | Dequest 2046/300 | 24.6 | | <0.5 |
| 90:10 | Dequest 2046/1000 | 25.8 | | <0.5 |
| 90:10 | Dequest 2066/100 | 24.2 | | <0.5 |
| 90:10 | Dequest 2066/300 | 24.6 | | <0.5 |
| 90:10 | Dequest 2066/1000 | 21.4 | | <0.5 |
| 90:10 | EDTA/300 | 13.4 | as disodium salt | 0.5 |
| 90:10 | Rake 12/300 | 19.9 | an acidic mixture | <0.5 |
| 90:10 | BCA 4/300 | 22.4 | as tetrasodium salt | <0.5 |
| 90:10 | BCA 6/300 | 24.7 | as hexasodium salt | 0.6 |
| 93:7 | BCA 6/300 | 27.2 | as hexasodium salt | 0.7 |

A series of test were carried out in which the SCPH granules had been made from another soda ash. The results are shown in Table 2.

**Table 2**

| Samples and testing results Uncoated SCPH, act.oxygen content 14.3 % | | | |
|---|---|---|---|
| **SCPH/coating wt.%** | **Chel.agent/weight in coating ppm** | **Decomposition % after 4 weeks** | **Moisture content %** |
| 90:10 | none | 25.0 | 0.5 |
| 90:10 | Dequest 2000/300 | 21.8 | 0.5 |
| 90:10 | Dequest 2010/300 | 27.2 | 0.4 |
| 90:10 | Dequest 2046/300 | 12.7 | 0.5 |
| 90:10 | Dequest 2066/300 | 17.6 | 0.5 |

A test was carried out as above, but the relative humidity was 69.5% instead of the 70% used in the earlier experiments. The results are shown in Table 3.

**Table 3**

| Samples and testing results Uncoated SCPH, act.oxygen content 13.2% | | | |
|---|---|---|---|
| **SCPH/coating wt.%** | **Chel.agent/weight in coating ppm** | **Decomposition % after 4 weeks** | **Moisture content %** |
| 90:10 | none | 20.8 | 0.4 |
| 90:10 | S,S EDDS/300 | 15.0 | |
| 90:10 | D,L-ISA/300 | 17.4 | |
| Note: The concentrations of chelating agents are calculated as acids | | | |

The results when using SCPH made by granulation from crystalline SCPH and then coated in a fluidized bed are show in Table 4. Temperature was 30 °C and relative humidity 69.5%.

**Table 4**

| Tests and results with coated SCPH, which has been made by granulation from crystalline SCPH, act.oxygen content 13.7%. | | | |
|---|---|---|---|
| **SCPH/coating wt.%** | **Chel.agent/weight in coating ppm** | **Decomposition % after 4 weeks** | **Moisture content %** |
| 90:10 | none | 47.40 | 0.4 |
| 90:10 | Dequest 2046/300 | 50.52 | |
| 90:10 | EDTA/300 | 47.40 | |
| 90:10 | D,L-ISA/300 | 45.36 | |
| 90:10 | S,S-EDDS/300 | 47.39 | |

- Dequest =: a trademark of Monsanto Company
- Dequest 2000 =: Aminotri (methylenephosphonic acid)
- Dequest 2010 =: 1-Hydroxyethylidene-1,1-diphosphonic acid
- Dequest 2046 =: Pentasodium salt of ethylenediaminetetra (methylenephosphonic acid)
- Dequest 2066 =: Heptasodium salt of diethylenetriaminepenta (methylenephosphonic acid)
- BCA 4 =: N-bis[( 1,2-dicarboxyethoxy)ethyl]amine
- BCA 6 =: N-bis[(1,2-dicarboxyethoxy)ethyl]aspartic acid
- Rake 12 =: a technical mixture of BCA 6 ( 19%) and BCA 4 (2%), containing also 1-2% of maleic, fumaric and malic acids
- S,S-EDDS =: S,S-Ethylenediamine-N,N'-disuccinic acid, tetrasodium salt
- D,L-ISA =: 2,2'-iminodisuccinic acid tetrasodium salt made from D,L-aspartic acid (containing about 50% D,L-ISA, 25% L,L-ISA and 25% D,D-ISA).

## Claims

1. A stabilized sodium carbonate peroxyhydrate comprising granules of sodium carbonate peroxyhydrate made of non-crystalline sodium carbonate peroxyhydrate and having a coating layer thereon, wherein said coating layer comprises sodium sulphate and a chelating agent selected from the group consisting of:
(a) (poly)aminophosphonic acids or alkali metal salts thereof,
(b) (poly)aminopolycarboxylic acids or alkali metal salts thereof, and
(c) N-bis- or tris-[(1,2-dicarboxy-ethoxy)ethyl]amines or alkali metal salts thereof,
and wherein the amount of the chelating agent is from 100 to 3000 ppm based on the weight of the coating layer.

2. A stabilized sodium carbonate peroxyhydrate according to claim 1, wherein said group (a) derivatives comprise (poly)aminophosphonic acid derivatives having the general formula (I) 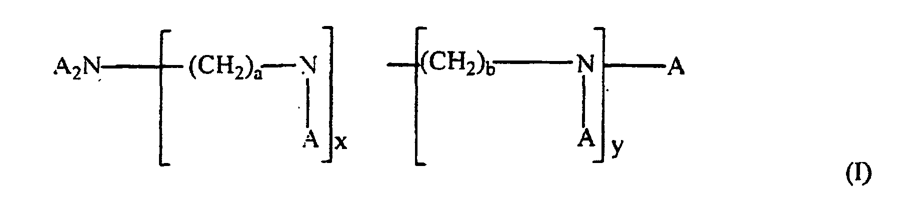 wherein
A is -CH₂PO₃R₂ , wherein R is hydrogen or M, wherein M is an alkali metal ion,
x is 0-6,
y is 0-6,
a is 2-10, and
b is 2-10.

3. A stabilized sodium carbonate peroxyhydrate according to claim 2, wherein said group (a) derivatives comprise aminotri(methylenephosphonic acid), pentasodium salt of ethylenediaminetetra(methylenephosphonic acid) or heptasodium salt of diethylenetriaminepenta(methylenephosphonic acid).

4. A stabilized sodium carbonate peroxyhydrate according to claim 1, wherein said group (b) derivatives comprise (poly)aminopolycarboxylic acid derivatives having the general formula (II) or (III) or (IV) 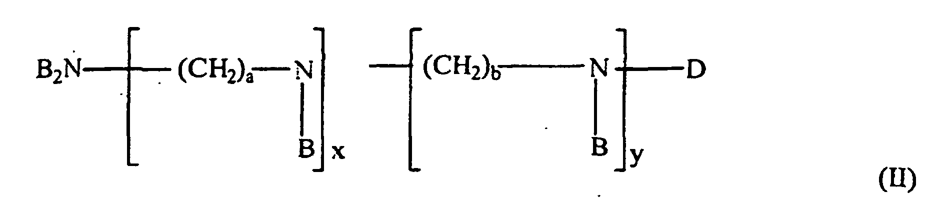 wherein
B is -CH₂COOR,
D is -CH₂COOR or -CH₂CH₂OH,
R is hydrogen or M, wherein M is an alkali metal ion,
x is 0-6,
y is 0-6,
a is 2-10, and
b is 2-10; 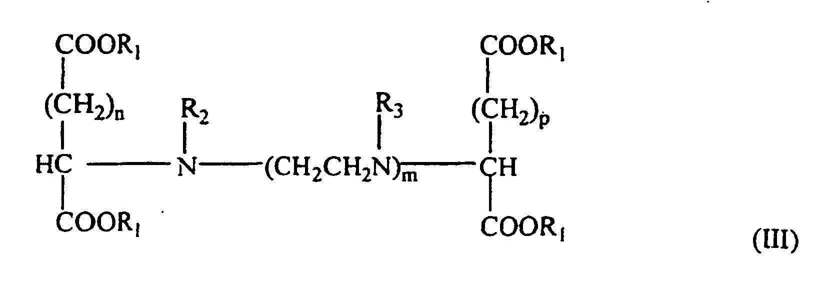
wherein
n is 1-3,
m is 0-3,
p is 1-3,
R₁'s are independently hydrogen or an alkali metal ion, and
R₂ and R₃ are independently hydrogen, CH₂OH, CH₂CH₂OH or CH₂O(CH₂CH₂O)₁₋₁₀CH₂CH₂OH; 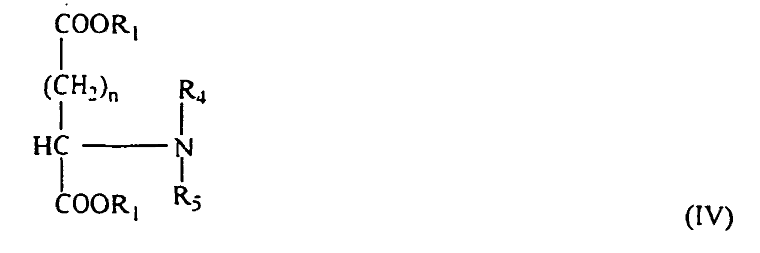
wherein
n is 1-3,
R₄ is -CH₂COOR₁
R₅ is -CH₂COOR₁ or hydrogen, and
R₁ is hydrogen or an alkali metal ion.

5. A stabilized sodium carbonate peroxyhydrate according to claim 4, wherein said group (b) derivatives of formula (II) comprise EDTA or DTPA.

6. A stabilized sodium carbonate peroxyhydrate according to claim 4, wherein said group (b) derivatives of formula (III) comprise ISA or EDDS.

7. A stabilized sodium carbonate peroxyhydrate according to claim 1, wherein said group (c) derivatives comprise N-bis- or tris-[(1,2-dicarboxy-ethoxy)-ethyl]-amine derivatives having the general formula (V) 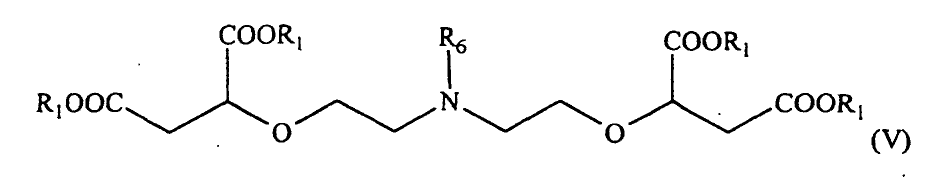 wherein 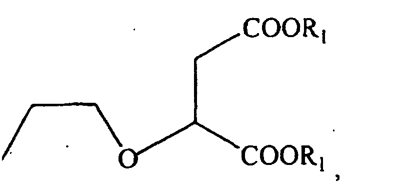
R₆ is hydrogen,
an alkyl group having 1-30 carbon atoms,
an alkyl group having 1-30 carbon atoms and additionally 1-10 carboxylic groups,
an alkyl group having 1-30 carbon atoms and additionally 1-10 carboxylic ester groups,
a (poly)ethoxylated hydrocarbon group having 1-20 ethoxyl groups, or
a carboxylic amide group having 1-30 carbon atoms, where the N-R₆ bond is an amide bond, and
R₁'s are independently hydrogen or an alkali metal ion.

8. A stabilized sodium carbonate peroxyhydrate according to claim 7, wherein said group (c) derivatives comprise N-bis[(1,2-dicarboxy-ethoxy)ethyl]amine or N-bis[(1,2-dicarboxy-ethoxy)ethyl]aspartic acid.

9. A stabilized sodium carbonate peroxyhydrate according to any of claims 1-8, wherein the amount of the coating layer is from 5 to 20 % by weight, preferably from 7 to 15 % by weight, based on the weight of uncoated sodium carbonate peroxyhydrate.

10. A stabilized sodium carbonate peroxyhydrate according to any of claims 1-9, wherein the amount of the chelating agent is from 200 to 2000 ppm, based on the weight of the coating layer.

11. A stabilized sodium carbonate peroxyhydrate according to any of claims 1-10, wherein the moisture content of the coated product is below 0.5 % by weight.

12. Use of a stabilized sodium carbonate peroxyhydrate according to any of claims 1-11 in detergents, cleaning agents or disinfectants, in particular in detergents containing silicate builders, such as zeolites.

13. A process for the preparation of a stabilized sodium carbonate peroxyhydrate according to any of claims 1-11, **characterized in that** an aqueous solution of sodium sulphate and said chelating agent is applied to granules of sodium carbonate peroxyhydrate followed by drying to obtain a coating layer comprising sodium sulphate and said chelating agent on said granules.

14. A process according to claim 13, wherein the aqueous solution of sodium sulphate and said chelating agent is applied by spraying onto said granules of sodium carbonate peroxyhydrate in a fluidized bed.

15. A process according to claim 14, wherein the process is carried out under such conditions that the moisture content of the coated granules is below 0.5 % by weight.

16. A process according to any of claims 13-15, wherein said granules of sodium carbonate peroxyhydrate are granules made by fluidized bed granulation.

## Patentansprüche

1. Stabilisiertes Natriumcarbonat-Peroxyhydrat, das aus nicht-kristallinem Natriumcarbonat-Peroxyhydrat hergestellte Natriumcarbonat-Peroxyhydrat-Granulatkörner umfasst und darauf eine Überzugsschicht aufweist, wobei die Überzugsschicht Natriumsulfat und einen Chelatbildner umfasst, welcher aus der Gruppe gewählt ist, die besteht aus:
(a) (Poly)aminophosphonsäuren oder deren Alkalimetallsalze,
(b) (Poly)aminopolycarbonsäuren oder deren Alkalimetallsalze, und
(c) N-bis- oder -tris[(1,2-dicarboxy-ethoxy)ethyl]amine oder deren Alkalimetallsalze,
und wobei die Menge des Chelatbildners je nach Gewicht der Überzugsschicht zwischen 100 und 3000 ppm liegt.

2. Stabilisiertes Natriumcarbonat-Peroxyhydrat nach Anspruch 1, bei dem die Derivate der Gruppe (a) (Poly)aminophosphonsäure-Derivate der allgemeinen Formel (I) umfassen 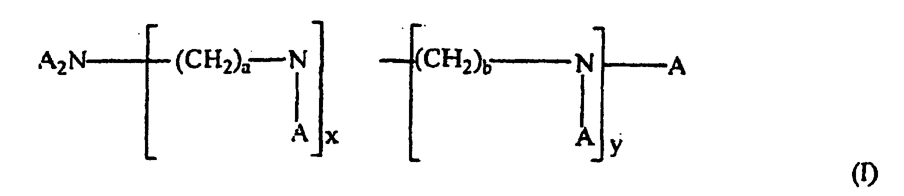 wobei
A -CH₂PO₃R₂ bedeutet, wobei R Wasserstoff oder M ist und M ein Alkalimetallion,
x gleich 0-6 ist,
y gleich 0-6 ist,
a gleich 2-10 ist, und
b gleich 2-10 ist.

3. Stabilisiertes Natriumcarbonat-Peroxyhydrat nach Anspruch 2, bei dem die Derivate der Gruppe (a) Aminotri(methylenphosponsäure), Pentanatriumsalz von Ethylendiamintetra(methylenphosphonsäure) oder Heptanatriumsalz von Diethylentriaminpenta(methylenphosphonsäure) umfassen.

4. Stabilisiertes Natriumcarbonat-Peroxyhydrat nach Anspruch 1, bei dem die Derivate der Gruppe (b) (Poly)aminopolycarbonsäure-Derivate der allgemeinen Formel (II) bzw. (III) bzw. (IV) umfassen 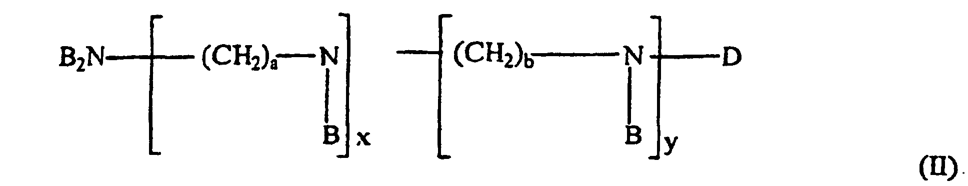 wobei
B gleich -CH₂COOR ist,
D gleich -CH₂COOR oder CH₂CH₂OH ist,
R gleich Wasserstoff oder M ist, wobei M ein Alkalimetallion ist,
x gleich 0-6 ist,
y gleich 0-6 ist,
a gleich 2-10 ist, und
b gleich 2-10 ist; 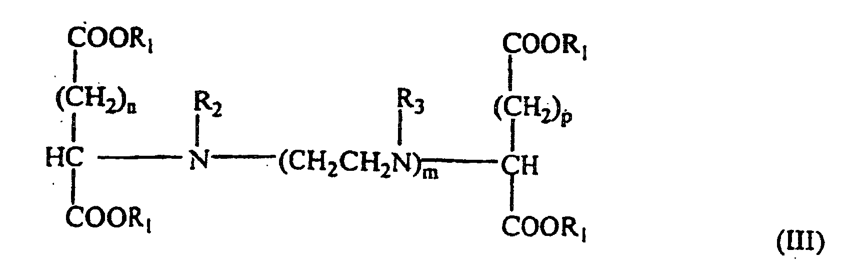
wobei
n gleich 1-3 ist,
m gleich 0-3 ist,
p gleich 1-3 ist
R₁ unabhängig voneinander Wasserstoff oder ein Alkalimetallion sind und
R₂ und R₃ unabhängig voneinander Wasserstoff, CH₂OH, CH₂CH₂OH oder CH₂O(CH₂CH₂O)₁₋₁₀CH₂CH₂OH sind; 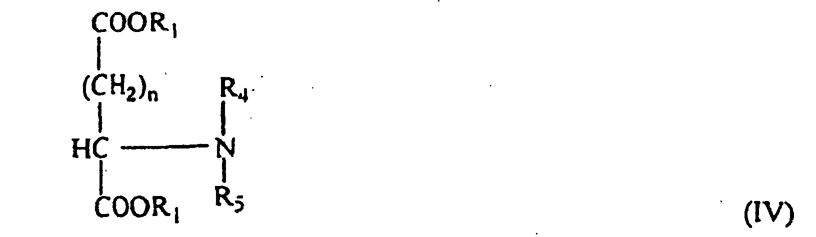
wobei
n gleich 1-3 ist,
R₁ gleich -CH₂COOR₁ ist,
R₅ gleich -CH₂COOR₁ oder Wasserstoff ist, und
R₁ gleich Wasserstoff oder ein Alkalimetallion ist.

5. Stabilisierten Natriumcarbonat-Peroxyhydrat nach Anspruch 4, bei dem die Derivate der Gruppe (b) der Formel (II) EDTA oder DTPA umfassen.

6. stabilisierten Natriumcarbonat-Peroxyhydrat nach Anspruch 4, bei dem die Derivate der Gruppe (b) der Formel (III) ISA oder EDDS umfassen.

7. Stabilisiertes Natriumcarbonat-Peroxyhydrat nach Anspruch 1, bei dem die Derivate der Gruppe (c) N-bis- oder - tris-[(1,2-dicarboxy-ethoxy)ethyl]amin-Derivate der allgemeinen Formel (V) umfassen 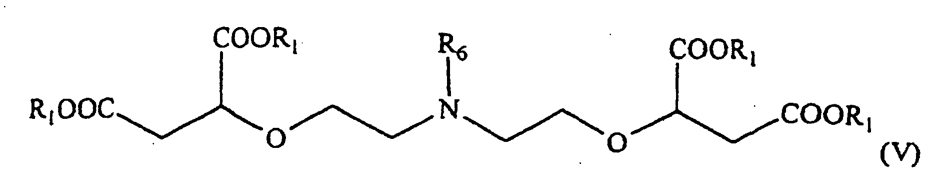 wobei
R₆ gleich Wasserstoff, 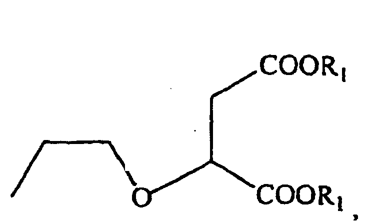
eine Alkylgruppe mit 1-30 Kohlenstoffatomen,
eine Alkylgruppe mit 1-30 Kohlenstoffatomen und zusätzlich 1-10 Carboxylgruppen,
eine Alkylgruppe mit 1-30 Kohlenstoffatomen und zusätzlich 1-10 Carboxylestergruppen,
eine (poly)ethoxylierte Kohlenwasserstoffgruppe mit 1-20 Ethoxylgruppen, oder eine Carboxylamidgruppe mit 1-30 Kohlenstoffatomen ist, bei der die N-R₆-Bindung eine Amidbindung ist, und
R₁ unabhängig voneinander Wasserstoff oder ein Alkalimetallion sind.

8. Stabilisiertes Natriumcarbonat-Peroxyhydrat nach Anspruch 7, bei dem die Derivate der Gruppe (c) N-bis[(1,2-dicarboxy-ethoxy)ethyl]amin oder N-bis[(1,2-dicarboxyethoxy)ethyl]asparaginsäure umfassen.

9. Stabilisiertes Natriumcarbonat-Peroxyhydrat nach einem der Ansprüche 1 bis 8, bei dem die Menge der Überzugsschicht je nach Gewicht des nicht beschichteten Natriumcarbonat-Peroxyhydrats zwischen 5 bis 20 Gew.-% liegt, vorzugsweise zwischen 7 bis 15 Gew.-%.

10. Stabilisiertes Natriumcarbonat-Peroxyhydrat nach einem der Ansprüche 1 bis 9, bei dem die Menge des Chelatbildners je nach Gewicht der Überzugsschicht zwischen 200 und 2000 ppm liegt.

11. Stabilisiertes Natriumcarbonat-Peroxyhydrat nach einem der Ansprüche 1 bis 10, bei dem der Feuchtigkeitsgehalt des beschichteten Produkts unter 0,5 Gew.-% liegt.

12. Verwendung eines stabilisierten Natriumcarbonat-Peroxyhydrats nach einem der Ansprüche 1 bis 11 in Detergentien, Reinigungsmitteln oder Desinfektionsmitteln, insbesondere in Detergentien, die Silikat-Builder wie Zeolithe enthalten.

13. Verfahren zur Herstellung eines stabilisierten Natriumcarbonat-Peroxyhydrats nach einem der Ansprüche 1-11, **dadurch gekennzeichnet, dass** eine wässrige Lösung von Natriumsulfat und dem Chelatbildner auf Natriumcarbonat-Peroxyhydrat-Granulatkörner aufgebracht und anschließend getrocknet wird, um eine Überzugsschicht zu erhalten, die Natriumsulfat und den Chelatbildner auf den Granulatkörnern umfasst.

14. Verfahren nach Anspruch 13, bei dem die wässrige Lösung von Natriumsulfat und Chelatbildner aufgebracht wird, indem diese in einem Fließbett auf die Natriumcarbonat-Peroxyhydrat-Granulatkörner gesprüht wird.

15. Verfahren nach Anspruch 14, bei dem das Verfahren unter solchen Bedingungen durchgeführt wird, dass der Feuchtigkeitsgehalt der beschichteten Granulatkörner unter 0,5 Gew.-% liegt.

16. Verfahren nach einem der Ansprüche 13-15, bei dem die Natriumcarbonat-Peroxyhydrat-Granulatkörner durch Fließbettgranulation hergestellte Granulatkörner sind.

## Revendications

1. Carbonate de sodium peroxyhydraté stabilisé comprenant des grains de carbonate de sodium peroxyhydraté composés de carbonate de sodium peroxyhydraté non cristallin et possédant en son dessus une couche d'enrobage, dans lequel ladite couche d'enrobage comprend du sulfate de sodium et un agent complexant choisi dans le groupe consistant en :
(a) des acides (poly)aminophosphoniques ou des sels de métaux alcalins de ceux-ci,
(b) des acides (poly)aminopolycarboxyliques ou des sels de métaux alcalins de ceux-ci, et
(c) des *N*-bis- ou tris[(1,2-dicarboxy-éthoxy)éthyl]amines ou des sels de métaux alcalins de celles-ci,
et dans lequel la quantité d'agent complexant est de 100 à 3000 ppm en se basant sur le poids de la couche d'enrobage.

2. Carbonate de sodium peroxyhydraté stabilisé selon la revendication 1, dans lequel lesdits dérivés du groupe (a) comprennent des dérivés d'acides (poly)aminophosphoniques de formule générale (I) : 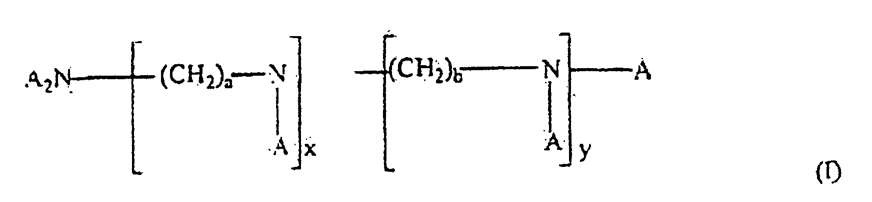 dans laquelle
A est un -CH₂PO₃R₂, dans lequel R est un hydrogène ou M, dans lequel M est un ion de métal alcalin,
x vaut de 0 à 6,
y vaut de 0 à 6,
a vaut de 2 à 10, et
b vaut de 2 à 10.

3. Carbonate de sodium peroxyhydraté stabilisé selon la revendication 2, dans lequel lesdits dérivés du groupe (a) comprennent l'aminotri(acide méthylènephosphonique), le sel de pentasodium de l'éthylènediaminetétra(acide méthylènephosphonique) ou le sel d'heptasodium du diéthylènetriaminepenta(acide méthylènephosphonique).

4. Carbonate de sodium peroxyhydraté stabilisé selon la revendication 1, dans lequel lesdits dérivés du groupe (b) comprennent des dérivés de l'acide (poly)aminopolycarboxylique de formule générale (II) ou (III) ou (IV) 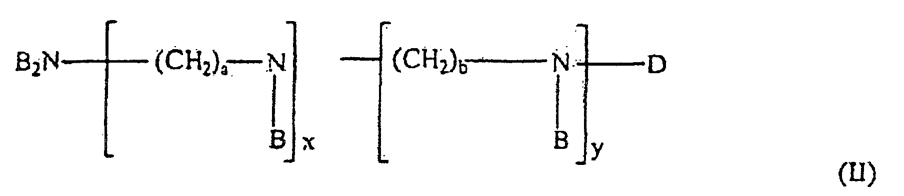 dans laquelle
B est -CH₂COOR
D est -CH₂COOR ou -CH₂CH₂OH,
R est un hydrogène ou M, dans lequel M est un ion de métal alcalin,
x vaut de 0 à 6,
y vaut de 0 à 6,
a vaut de 2 à 10, et
b vaut de 2 à 10 ; 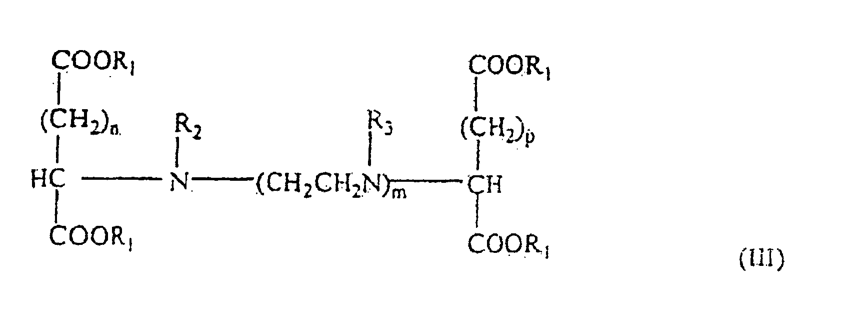
dans laquelle
n vaut de 1 à 3,
m vaut de 0 à 3,
p vaut de 1 à 3,
les R₁ sont indépendamment un hydrogène ou un ion de métal alcalin, et R₂ et R₃ sont indépendamment un hydrogène, CH₂OH, CH₂CH₂OH ou CH₂O(CH₂CH₂O) ₁₋₁₀CH₂CH₂OH ; 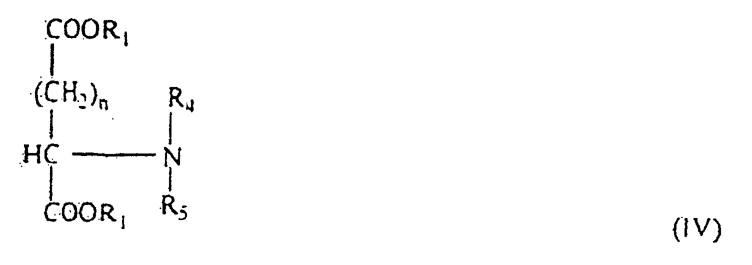
dans laquelle
n vaut de 1 à 3,
R₄ est -CH₂COOR₁
R₅ est -CH₂COOR₁ ou un hydrogène, et
R₁ est un hydrogène ou un ion de métal alcalin.

5. Carbonate de sodium peroxyhydraté stabilisé selon la revendication 4, dans lequel lesdits dérivés du groupe (b) de formule (II) comprennent l'EDTA ou le DTPA.

6. Carbonate de sodium peroxyhydraté stabilisé selon la revendication 4, dans lequel lesdits dérivés du groupe (b) de formule (III) comprennent l'ISA ou l'EDDS.

7. Carbonate de sodium peroxyhydraté stabilisé selon la revendication 1, dans lequel lesdits dérivés du groupe (c) comprennent des dérivés de *N*-bis- ou tris-[(1,2-dicarboxy-éthoxy)-éthyl]-amine de formule générale (V) 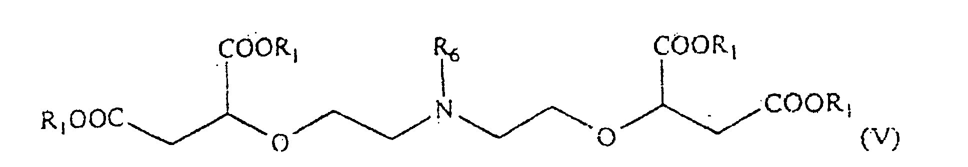 dans laquelle 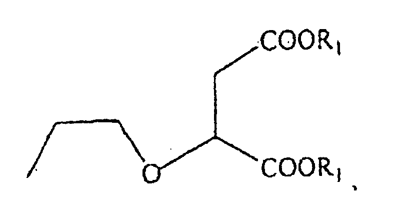
R₆ est un hydrogène,
un groupe alkyle ayant de 1 à 30 atomes de carbone,
un groupe alkyle ayant de 1 à 30 atomes de carbone et en plus de 1 à 10 groupes carboxyliques,
un groupe alkyle ayant de 1 à 30 atomes de carbone et en plus de 1 à 10 groupes esters carboxyliques,
un groupe hydrocarbure (poly)éthoxylaté ayant de 1 à 20 groupes éthoxyles, ou
un groupe amide carboxylique ayant de 1 à 30 atomes de carbone, où la liaison N-R₆ est une liaison amide, et
les R₁ sont indépendamment un hydrogène ou un ion de métal alcalin.

8. Carbonate de sodium peroxyhydraté stabilisé selon la revendication 7, dans lequel lesdits dérivés du groupe (c) comprennent la *N*-bis[(1,2-dicarboxyéthoxy)éthyl]amine ou l'acide *N*-bis[(1,2-dicarboxy-éthoxy)éthyl]aspartique.

9. Carbonate de sodium peroxyhydraté stabilisé selon l'une des revendications 1 à 8, .dans lequel la quantité de couche d'enrobage est de 5 à 20 % en poids, de préférence de 7 à 15 % en poids, en se basant sur le poids de carbonate de sodium peroxyhydraté non enrobé.

10. Carbonate de sodium peroxyhydraté stabilisé selon l'une des revendications 1 à 9, dans lequel la quantité d'agent complexant est de 200 à 2000 ppm, en se basant sur le poids de la couche d'enrobage.

11. Carbonate de sodium peroxyhydraté stabilisé selon l'une des revendications 1 à 10, dans lequel la teneur en humidité du produit enrobé est inférieure à 0,5 % en poids.

12. Utilisation d'un carbonate de sodium peroxyhydraté stabilisé selon l'une des revendications 1 à 11 dans les détergents, les produits nettoyants ou les désinfectants, en particulier dans les détergents contenant des adjuvants silicatés, tels que les zéolithes.

13. Procédé pour la préparation d'un carbonate de sodium peroxyhydraté stabilisé selon l'une des revendications 1 à 11, **caractérisé en ce qu'**une solution aqueuse de sulfate de sodium et dudit agent complexant est appliquée sur les grains de carbonate de sodium peroxyhydraté, après quoi on procède à un séchage pour obtenir une couche d'enrobage comprenant du sulfate de sodium et ledit agent complexant sur lesdits grains.

14. Procédé selon la revendication 13, dans lequel la solution aqueuse de sulfate de sodium et dudit agent complexant est appliquée par pulvérisation sur lesdits grains de carbonate de sodium peroxyhydraté sur un lit fluidisé.

15. Procédé selon la revendication 14, dans lequel le procédé est mené dans des conditions telles que la teneur en humidité des grains enrobés est inférieure à 0,5 % en poids.

16. Procédé selon l'une des revendications 13 à 15, dans lequel lesdits grains de carbonate de sodium peroxyhydraté sont des grains fabriqués par granulation en lit fluidisé.
